# FASCICULE DE BREVET EUROPEEN

(11) **EP 3 414 999 B1**
(45) Date de publication et mention de la délivrance du brevet: **01.01.2020**
(21) Numéro de dépôt: 18176917.5
(22) Date de dépôt: 11.06.2018
(51) Int. Cl.: A01K 1/02

(54) **BATIMENT D'ELEVAGE DE PORCS**
GEBÄUDE FÜR DIE SCHWEINEAUFZUCHT
BUILDING FOR BREEDING PIGS

(30) Priorité: 12.06.2017 FR 1755233
(43) Date de publication de la demande: 19.12.2018
(73) Titulaire: ASSERVA, 22400 Lamballe (FR); IFIP Institut du Porc, 75020 Paris (FR)
(72) Inventeur: ROUSSELIERE, Yvonnick, 75020 Paris (FR)
(74) Mandataire: Cabinet Le Guen Maillet

(56) Documents cités:
- CH-A5- 685 089
- DD-A1- 262 572
- DE-A1- 3 102 361
- DE-U1-202004 002 751
- US-A- 5 878 695

## Description

### DOMAINE TECHNIQUE

La présente invention concerne un bâtiment d'élevage de porcs comportant des cases modulables.

### ETAT DE LA TECHNIQUE ANTERIEURE

Un bâtiment d'élevage de porcs comporte une salle dans laquelle sont disposées des cases réparties de part et d'autre d'un ou plusieurs couloirs.

Dans le cas de l'élevage des truies en maternité, une cage de contention est disposée dans chaque case. La truie est bloquée dans la cage de rétention pendant toute la lactation tandis que le reste de la case est occupée par les porcelets. Chaque case donne la possibilité à l'éleveur d'accéder à l'auge de la truie et aux porcelets.

La surface minimale de la case est définie par des normes qui tiennent compte du bien-être animal.

De nouvelles pratiques préconisent que quelques jours après la mise-bas, la truie peut être libérée de la cage de rétention au sein de la case pour lui permettre de circuler librement dans celle-ci sans être entravée par la cage de contention. Pour ce faire, la surface de la case doit permettre à la truie de se retourner et de proposer une zone spécifique aux porcelets pour réduire les risques d'écrasement lorsque la truie se déplace ou se couche. Pour cela, la case doit avoir une surface plus importante que celles des cases actuelles soumises à la norme.

Dans les nouveaux bâtiments qui sont construits, des cases plus grandes peuvent être intégrées facilement en agrandissant l'emprise au sol du bâtiment et en équipant lesdites cases d'une cage de contention qui peut s'ouvrir pour libérer la truie après la mise-bas. Par contre, dans le cadre de bâtiments de maternité déjà existants, aucune solution ne permet de tenir compte de ces nouvelles pratiques sans réduire le nombre de truies ou nécessiter la construction de nouvelles places de maternité très onéreuses.

Le document US 5878695A décrit un bâtiment d'élevage de porcs dont la surface de la case est modulable.

### EXPOSE DE L'INVENTION

Un objet de la présente invention est de proposer un bâtiment d'élevage pour des porcs qui présente au moins une case dont la surface est modulable.

A cet effet, est proposé un bâtiment d'élevage pour élever des porcs, ledit bâtiment comportant :
- un couloir,
- au moins une case disposée le long du couloir et séparée du couloir par une paroi de séparation qui longe le couloir,
- des moyens de guidage prévus pour guider chaque paroi de séparation d'une première position, où la paroi de séparation n'empiète pas sur le couloir, à une deuxième position où la paroi de séparation empiète sur le couloir et inversement, et
- des moyens d'actionnement prévus pour déplacer chaque paroi de séparation de la première position à la deuxième position et inversement,
le bâtiment d'élevage étant caractérisé en ce qu'au moins une case est équipée d'une cage de contention pour une truie dont le bat-flanc le plus proche de la paroi de séparation est parallèle à la paroi de séparation, en ce que ledit bat-flanc constitue une porte mobile entre une position fermée et une position ouverte, et en ce que des moyens de fixation sont prévus pour fixer la porte à la paroi de séparation et en ce que lors de la manœuvre de la paroi de séparation de la première position à la deuxième position, la porte se déplace en même temps de la position fermée à la position ouverte.

Avantageusement, chaque case présente deux parois de limitation qui sont perpendiculaires à la paroi de séparation qui longe la case et qui s'étendent en regard de la paroi de séparation qui longe la case, pour chaque paroi de limitation d'une case, la paroi de séparation qui longe ladite case porte au moins un panneau qui obture le passage entre la paroi de limitation et la paroi de séparation que cette dernière soit dans la première position ou dans la deuxième position.

Avantageusement, pour chaque paroi de limitation qui est entre deux cases, la paroi de séparation porte deux panneaux qui s'étendent perpendiculairement à la paroi de séparation, un des panneaux est en appui contre la surface de la paroi de limitation qui est orientée vers l'intérieur de l'une des cases et l'autre panneau est en appui contre la surface de la paroi de limitation qui est orientée vers l'intérieur de l'autre case.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 est une vue en perspective d'un bâtiment d'élevage selon l'invention dans une première position,
la Fig. 2 est une vue en perspective du bâtiment d'élevage de la Fig. 1 dans une deuxième position,
la Fig. 3 est une vue en perspective d'un mode de réalisation particulier, et
la Fig. 4 est une vue en perspective d'un autre mode de réalisation particulier.

### EXPOSE DETAILLE DE MODES DE REALISATION

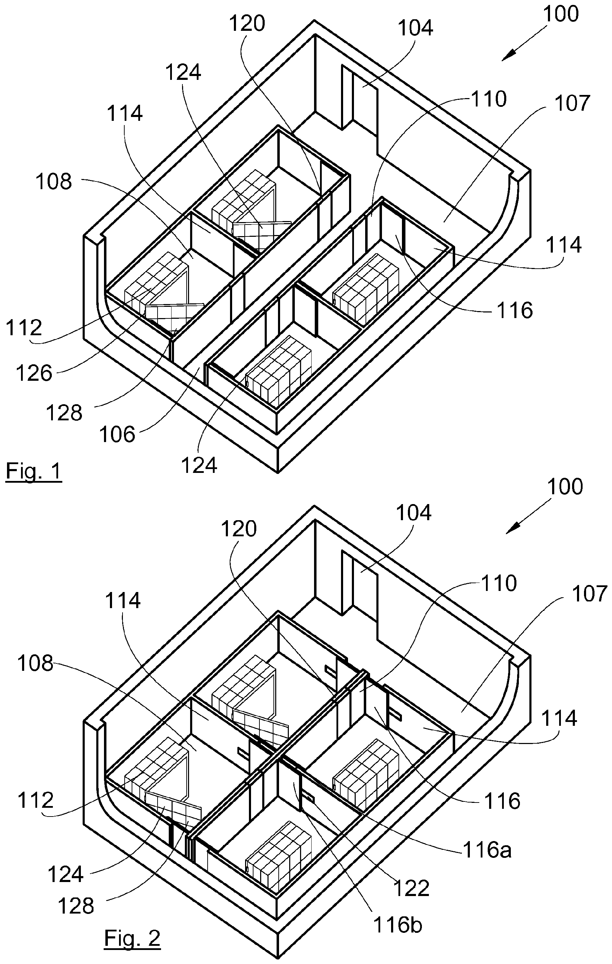

La Fig. 1 et la Fig. 2 montrent un bâtiment d'élevage 100 selon l'invention et le bâtiment d'élevage 100 est prévu pour contenir des porcs et selon une variante décrite ci-dessous, pour contenir des truies qui viennent de mettre bas.

La Fig. 1 montre le bâtiment 100 dans une première position et la Fig. 2 montre le bâtiment 100 dans une deuxième position.

Le bâtiment 100 comporte quatre murs, une porte d'accès 104 et un couloir 106 qui permet la circulation d'un éleveur dans le bâtiment 100.

Dans le mode de réalisation de l'invention présenté sur les Figs. 1 et 2, le couloir 106 n'est pas dans le prolongement de la porte d'accès 104 et le bâtiment 100 comprend un couloir intermédiaire 107 qui permet de relier la porte et le couloir 106.

Le bâtiment 100 présente également une pluralité de cases 108 qui sont réparties en deux rangées de part et d'autre du couloir 106. Dans le mode de réalisation de l'invention présenté ici, le couloir 106 s'étend parallèlement à la longueur des cases 108, mais une orientation différente des cases 108 est possible et le couloir 106 peut s'étendre parallèlement à la largeur des cases 108.

Dans le mode de réalisation de l'invention présenté sur les Figs., il y a quatre cases 108 réparties par paire de chaque côté du couloir 106, mais il est possible de prévoir plus de cases 108 réparties de part et d'autre du couloir 106, mais il est également possible de prévoir que le couloir 106 dessert une seule rangée de cases 108, l'autre rangée de cases 108 étant remplacée par exemple par un mur du bâtiment 100.

D'une manière générale, le bâtiment 100 comporte donc un couloir 106 le long duquel est agencée au moins une case 108.

Chaque case 108 est séparée du couloir 106 par une paroi de séparation 110 qui est verticale et qui longe le couloir 106.

Chaque paroi de séparation 110 est mobile entre une première position représentée à la Fig. 1 et une deuxième position représentée à la Fig. 2.

Dans la première position, chaque paroi de séparation 110 n'empiète pas sur le couloir 106 et laisse le passage dans le couloir 106 libre, et dans la deuxième position, chaque paroi de séparation 110 empiète sur le couloir 106, réduisant d'autant la largeur du couloir 106.

Ainsi, dans la deuxième position, la surface de chaque case 108 a été augmentée par rapport à la surface de la case 108 dans la première position permettant d'obtenir un espace plus grand pour le porc présent dans la case 108.

Deux cases 108 voisines sont séparées l'une de l'autre par une paroi de limitation 114 perpendiculaire à la/les parois de séparation 110 qui longent les cases 108. De la même manière, une case 108 qui se trouve à l'extrémité de l'alignement de cases 108, en particulier qui est voisine d'un mur perpendiculaire à la paroi de séparation 110 peut présenter également une paroi de limitation 114 qui longe le mur ou le mur peut constituer en lui-même la paroi de limitation 114.

Dans le mode de réalisation de l'invention présenté sur les Figs., il y a une paroi de limitation 114 le long de chaque mur du bâtiment 100, mais il est donc possible de prévoir que les murs servent de paroi de limitation 114.

Ainsi, chaque case 108 présente deux parois de limitation 114 qui s'étendent perpendiculairement à et en regard de la paroi de séparation 110 de la case 108.

Le guidage d'une position à l'autre de la paroi de séparation 110 s'effectue grâce à des moyens de guidage comme par exemple des glissières au sol ou sur les parois de limitation 114 ou sous le plancher le long desquelles coulisse chaque paroi de séparation 110 ou par l'intégration de roulettes sous la paroi de séparation 110.

Le bâtiment 100 présente également des moyens d'actionnement prévus pour déplacer chaque paroi de séparation 110 de la première position à la deuxième position et inversement. Les moyens d'actionnement peuvent être manuels ou automatiques.

Dans le cas manuel, les moyens d'actionnement comportent par exemple un système de tringlerie et une poignée, où la poignée est disposée près de la porte d'accès 104 et où les tringles sont disposées sous le plancher du bâtiment 100 et reliées mécaniquement entre la poignée et les parois de séparation 110. Lorsque l'exploitant pénètre dans le bâtiment 100, il actionne la poignée pour passer de la deuxième position à la première position afin de pouvoir circuler dans le couloir 106, et lorsqu'il sort du bâtiment 100, il actionne à nouveau la poignée pour passer de la première position à la deuxième position afin d'élargir les cases 108.

Dans le cas automatique, qu'il soit motorisé ou pneumatique, les moyens d'actionnement comportent par exemple un interrupteur placé près de la porte d'accès 104 et un ensemble d'actionneurs, par exemple des vérins, où chaque actionneur est fixé entre une paroi de séparation 110 et un point fixe. Lorsque l'exploitant pénètre dans le bâtiment 100, il actionne l'interrupteur pour activer les actionneurs qui font passer les parois de séparation 110 de la deuxième position à la première position, et lorsqu'il sort du bâtiment 100, il actionne à nouveau l'interrupteur pour activer à nouveau les actionneurs qui font passer les parois de séparation de la première position à la deuxième position. Les vérins peuvent également être remplacés par des moteurs et l'interrupteur par un détecteur d'ouverture de la porte d'accès 104.

Ainsi, la mise en place d'un tel agencement dans un bâtiment d'élevage existant permet d'agrandir les cases sans avoir à modifier les murs du bâtiment.

Dans le mode de réalisation de l'invention présenté sur la Fig. 2, chaque paroi de séparation 110 se déplace d'une longueur égale à la moitié de la largeur du couloir 106, obturant ainsi complètement le couloir 106, mais selon la surface des cases 108 dans la première position et la surface des cases 108 à atteindre dans la deuxième position, le déplacement des parois de séparation 110 peut être supérieur ou inférieur à la moitié de la largeur du couloir 106.

De la même manière dans le mode de réalisation de l'invention présenté sur les Figs., il y a une seule paroi de séparation 110 pour la rangée complète de cases 108, mais il est également possible de prévoir une paroi de séparation 110 pour chaque case 108. Dans ce cas, il peut être prévu des moyens d'actionnement pour chaque case 108 afin de pouvoir moduler les cases 108 pouvant être agrandies et celles ne devant pas l'être.

Dans le mode de réalisation de l'invention présenté sur les Figs., chaque paroi de séparation 110 présente, pour chaque case 108, que ladite paroi de séparation 110 longe un portail 120 qui permet l'accès à l'intérieur de la case 108 depuis le couloir 106.

Pour chaque paroi de limitation 114 d'une case 108, la paroi de séparation 110 qui longe ladite case 108 porte au moins un panneau 116, 116a-b qui obture le passage entre la paroi de limitation 114 et la paroi de séparation 110 que cette dernière soit dans la première position ou dans la deuxième position.

De tels panneaux 116, 116a-b évitent que des porcelets ou des truies puissent sortir de la case 108 dans laquelle ils se trouvent.

Dans le mode de réalisation de l'invention présenté sur les Figs., pour chaque paroi de limitation 114 qui longe un mur, la paroi de séparation 110 porte un seul panneau 116 qui s'étend perpendiculairement à la paroi de séparation 110 et qui est en appui contre la surface de la paroi de limitation 114 qui est orientée vers l'intérieur de la case 108.

Pour chaque paroi de limitation 114 qui est entre deux cases 108, la paroi de séparation 110 porte deux panneaux 116a-b qui s'étendent perpendiculairement à la paroi de séparation 110 et où un des panneaux 116a est en appui contre la surface de la paroi de limitation 114 qui est orientée vers l'intérieur de l'une des cases 108 et où l'autre panneau 116b est en appui contre la surface de la paroi de limitation 114 qui est orientée vers l'intérieur de l'autre case 108.

Dans un autre mode de réalisation non représenté, il est également possible de prévoir que chaque panneau se déplace à l'intérieur d'un évidement prévu à cet effet dans la paroi de limitation 114.

Comme expliqué ci-dessus, pour le déplacement des panneaux 116, 116a-b et donc de la paroi de séparation 110 par rapport aux parois de limitation 114, il est possible de prévoir la mise en place de glissières 122 horizontales et fixées sur les parois de limitation 114 et dans lesquelles un coulisseau solidaire du panneau 116, 116a-b se déplace.

Dans le cas de l'élevage de truies, au moins une case 108 est équipée d'une cage de contention 112 dans laquelle la truie est enfermée. La cage de contention 112 comporte une porte 124 montée mobile sur des charnières 126 à axe vertical entre une position fermée dans laquelle la truie reste contrainte dans la cage de contention 112 et une position ouverte dans laquelle la truie peut circuler librement dans la case 108.

La porte 124 est constituée ici par un des bat-flancs se trouvant le long de la truie.

Sur les Figs. 1 et 2, les portes 124 de deux cages de contention 112 sont ouvertes alors que les portes 124 de deux autres cages de contention 112 sont fermées.

La porte 124 est constituée par un des bat-flancs qui se trouve le long de la truie.

La cage de contention 112 est positionnée dans la case 108 de manière à ce que, en position fermée, le bat-flanc constituant la porte 124 est parallèle à la paroi de séparation 110 et est le bat-flanc le plus proche de la paroi de séparation 110.

Des moyens de fixation sont prévus pour fixer la porte 124 à la paroi de séparation 110 et ainsi lors de la manœuvre de la paroi de séparation 110 de la première position à la deuxième position, la porte 124 se déplace en même temps de la position fermée à la position ouverte.

Ainsi, un espace 128, ici triangulaire, délimité par la porte 124, la paroi de séparation 110 et la paroi de limitation 114 constituent un espace protégé dans lequel les porcelets peuvent évoluer sans risque de se faire écraser par la truie.

Les moyens de fixation peuvent prendre toutes les formes adaptées qui permettent à l'extrémité libre de la porte 124 de suivre la paroi de séparation 110 dans son déplacement.

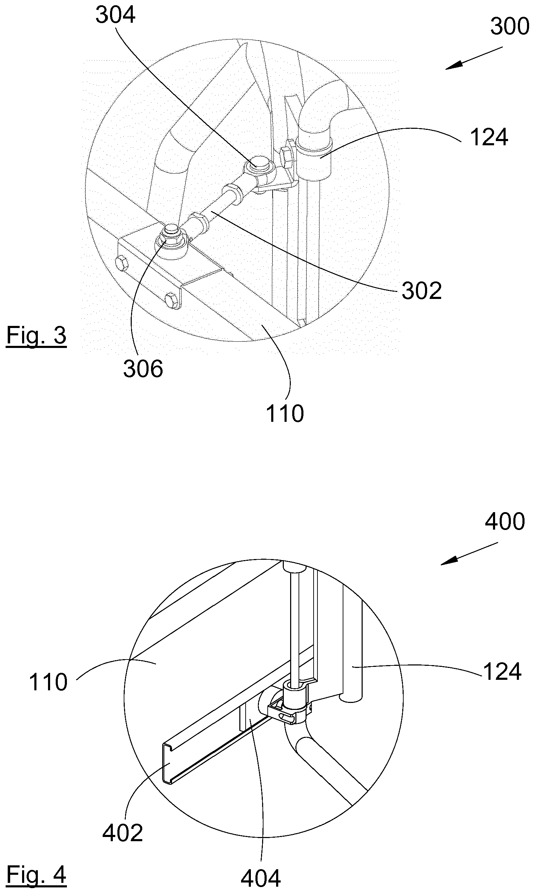

La Fig. 3 montre un mode de réalisation particulier des moyens de fixation 300 qui comportent une tige 302 dont une extrémité est fixée à la porte 124 par l'intermédiaire d'une rotule 304 et dont l'autre extrémité est fixée à la paroi de séparation 110 par l'intermédiaire d'une rotule 306.

La Fig. 4 montre un autre mode de réalisation des moyens de fixation 400 qui comportent une glissière 402 horizontale et fixée à la paroi de séparation 110, un coulisseau 404 monté coulissant à l'intérieur de la glissière 402, le coulisseau 404 étant en outre fixé à la porte 124 par l'intermédiaire d'une liaison pivot à axe vertical.

## Revendications

1. Bâtiment d'élevage (100) pour élever des porcs, ledit bâtiment (100) comportant :
- un couloir (106),
- au moins une case (108) disposée le long du couloir (106) et séparée du couloir (106) par une paroi de séparation (110) qui longe le couloir (106),
- des moyens de guidage prévus pour guider chaque paroi de séparation (110) d'une première position, où la paroi de séparation (110) n'empiète pas sur le couloir (106), à une deuxième position où la paroi de séparation (110) empiète sur le couloir (106) et inversement, et
- des moyens d'actionnement prévus pour déplacer chaque paroi de séparation (110) de la première position à la deuxième position et inversement,
le bâtiment d'élevage (100) étant **caractérisé en ce qu'**au moins une case (108) est équipée d'une cage de contention (112) pour une truie dont le bat-flanc le plus proche de la paroi de séparation (110) est parallèle à la paroi de séparation (110), **en ce que** ledit bat-flanc constitue une porte (124) mobile entre une position fermée et une position ouverte, et **en ce que** des moyens de fixation sont prévus pour fixer la porte (124) à la paroi de séparation (110) et **en ce que** lors de la manœuvre de la paroi de séparation (110) de la première position à la deuxième position, la porte (124) se déplace en même temps de la position fermée à la position ouverte.

2. Bâtiment d'élevage (100) selon la revendication 1, **caractérisé en ce que** chaque case (108) présente deux parois de limitation (114) qui sont perpendiculaires à la paroi de séparation (110) qui longe la case (108) et qui s'étendent en regard de la paroi de séparation (110) qui longe la case (108), **en ce que** pour chaque paroi de limitation (114) d'une case (108), la paroi de séparation (110) qui longe ladite case (108) porte au moins un panneau (116, 116a-b) qui obture le passage entre la paroi de limitation (114) et la paroi de séparation (110) que cette dernière soit dans la première position ou dans la deuxième position.

3. Bâtiment d'élevage (100) selon la revendication 2, **caractérisé en ce que** pour chaque paroi de limitation (114) qui est entre deux cases (108), la paroi de séparation (110) porte deux panneaux (116a-b) qui s'étendent perpendiculairement à la paroi de séparation (110), **en ce qu'**un des panneaux (116a) est en appui contre la surface de la paroi de limitation (114) qui est orientée vers l'intérieur de l'une des cases (108) et **en ce que** l'autre panneau (116b) est en appui contre la surface de la paroi de limitation (114) qui est orientée vers l'intérieur de l'autre case (108).

## Patentansprüche

1. Aufzuchtgebäude (100) zum Aufziehen von Schweinen, wobei das Gebäude (100) umfasst:
- einen Gang (106),
- mindestens eine Bucht (108), die entlang des Gangs (106) angeordnet ist und vom Gang (106) durch eine Trennwand (110) getrennt ist, die entlang des Gangs (106) verläuft,
- Führungsmittel, die dazu vorgesehen sind, jede Trennwand (110) aus einer ersten Position, in der die Trennwand (110) nicht in den Gang (106) vordringt, in eine zweite Position, in der die Trennwand (110) in den Gang (106) vordringt, und umgekehrt zu führen, und
- Betätigungsmittel, die dazu vorgesehen sind, jede Trennwand (110) aus der ersten Position in die zweite Position und umgekehrt zu verlagern,
wobei das Aufzuchtgebäude (100) **dadurch gekennzeichnet ist, dass** mindestens eine Bucht (108) mit einem Sauenkäfig (112) ausgestattet ist, dessen der Trennwand (110) nächstgelegene Seitenwand parallel zur Trennwand (110) ist, dass die Seitenwand eine Tür (124) bildet, die zwischen einer geschlossenen Position und einer geöffneten Position beweglich ist, und dass Befestigungsmittel vorgesehen sind, um die Tür (124) an der Trennwand (110) zu befestigen, und dass sich beim Verschieben der Trennwand (110) aus der ersten Position in die zweite Position die Tür (124) gleichzeitig aus der geschlossenen Position in die geöffnete Position verlagert.

2. Aufzuchtgebäude (100) nach Anspruch 1, **dadurch gekennzeichnet, dass** jede Bucht (108) zwei Begrenzungswände (114) aufweist, die senkrecht zu der Trennwand (110) sind, die entlang der Bucht (108) verläuft, und die sich gegenüber der Trennwand erstrecken (110), die entlang der Bucht (108) verläuft, dass die Trennwand (110), die entlang der Bucht (108) verläuft, für jede Begrenzungswand (114) einer Bucht (108) mindestens eine Platte (116, 116a-b) trägt, die den Durchlass zwischen der Begrenzungswand (114) und der Trennwand (110) verschließt, gleich ob Letztere in der ersten Position oder in der zweiten Position ist.

3. Aufzuchtgebäude (100) nach Anspruch 2, **dadurch gekennzeichnet, dass** die Trennwand (110) für jede Begrenzungswand (114), die zwischen zwei Buchten (108) ist, zwei Platten (116a-b) trägt, die sich senkrecht zu der Trennwand (110) erstrecken, dass eine der Platten (116a) an der Fläche der Begrenzungswand (114) anliegt, die dem Innenraum der einen der Buchten (108) zugewandt ist, und dass die andere Platte (116b) an der Fläche der Begrenzungswand (114) anliegt, die dem Innenraum der anderen Bucht (108) zugewandt ist.

## Claims

1. Building (100) for breeding pigs, said building (100) comprising:
- an aisle (106),
- at least one pen (108) arranged along the aisle (106) and separated from the aisle (106) by a separation wall (110) that runs along the aisle (106),
- guiding means provided such as to guide each separation wall (110) from a first position, in which the separation wall (110) does not encroach on the aisle (106), to a second position, in which the separation wall (110) encroaches on the aisle (106), and vice versa, and
- actuation means provided such as to move each separation wall (110) from the first position to the second position, and vice versa,
the building (100) for breeding being **characterized in that** at least one pen (108) is equipped with a crush (112) for a sow, of which the closest plank to the separation wall (110) is parallel to the separation wall (110), **in that** said plank constitutes a door (124) that can move between a closed position and an open position, **in that** securing means are provided for fastening the door (124) to the separation wall (110), and **in that**, upon manoeuvring the separation wall (110) from the first position to the second position, the door (124) moves at the same time from the closed position to the open position.

2. Building (100) for breeding according to Claim 1, **characterized in that** each pen (108) has two limiting walls (114) that are perpendicular to the separation wall (110) that runs along the pen (108) and that extend opposite the separation wall (110) that runs along the pen (108), and **in that**, for each limiting wall (114) of a pen (108), the separation wall (110) that runs along said pen (108) carries at least one panel (116, 116a-b) that closes off the passage between the limiting wall (114) and the separation wall (110) that this latter is in the first position or in the second position.

3. Building (100) for breeding according to Claim 2, **characterized in that**, for each limiting wall (114) that is between two pens (108), the separation wall (110) carries two panels (116a-b) that extend perpendicularly to the separation wall (110), **in that** one (116a) of the panels bears against the surface of the limiting wall (114) that is oriented towards the interior of one of the pens (108), and **in that** the other panel (116b) bears against the surface of the limiting wall (114) that is oriented towards the interior of the other pen (108).
